(19) Europäisches Patentamt
European Patent Office
Office européen des brevets

(11) **EP 1 895 158 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(51) Int Cl.:
***F03D 9/00*** *(2016.01)*

(21) Anmeldenummer: **07014634.5**

(22) Anmeldetag: **26.07.2007**

(54) **Verfahren zum Betrieb einer Windenergieanlage mit einem Synchrongenerator und einem Überlagerungsgetriebe**

Method for operating a wind farm with a synchronous generator and a differential drive

Procédé destiné au fonctionnement d'une éolienne dotée d'un générateur synchrone et une transmission diifférentielle

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.08.2006 DE 102006040930**

(43) Veröffentlichungstag der Anmeldung:
**05.03.2008 Patentblatt 2008/10**

(73) Patentinhaber: **NORDEX Energy GmbH**
**Langenhorner Chaussee 600**
**DE-22419 Hamburg (DE)**

(72) Erfinder:
• **Nitzpon, Joachim**
**20255 Hamburg (DE)**
• **Woldmann, Thomas-Paul**
**21129 Hamburg (DE)**

(74) Vertreter: **Hauck Patentanwaltspartnerschaft mbB**
**Postfach 11 31 53**
**20431 Hamburg (DE)**

(56) Entgegenhaltungen:
JP-A- 2005 224 079    US-A- 4 461 957
US-A- 4 464 579    US-A- 4 613 760
US-A- 4 613 763    US-A1- 2005 194 787
US-A1- 2005 236 838    US-A1- 2007 057 515

**Beschreibung**

Die vorliegende Erfindung betrifft ein Verfahren zum Betrieb einer Windenergieanlage mit einem Synchrongenerator und einem Überlagerungsgetriebe.

Aus einem Übersichtsartikel "Drehzahlvariable Windkraftanlagen mit elektrisch geregeltem Überlagerungsgetriebe" von P. Caselitz et al., Konferenzband "DEWEK '92", S. 171-175, wird der Einsatz elektrisch geregelter Überlagerungsgetriebe für den drehzahlvariablen Betrieb von Windkraftanlagen vorgestellt. Caselitz et al. erläutern, daß bei diesem Konzept die Drehzahlvariabilität nicht im elektrischen Teil sondern im mechanischen Teil der Anlage realisiert wird. Hierzu wird ein Überlagerungsgetriebe vorgesehen, das eine dritte Welle besitzt, über die das Drehzahlverhältnis zwischen Rotor und Generator an der Windenergieanlage variiert werden kann. Der Zusammenhang zwischen den Drehzahlen der drei Wellen läßt sich wie folgt zusammenfassen:

$$i_1 \omega_R - i_2 \dot{\omega}_C - \dot{\omega}_G = 0 \ ,$$

wobei $i_1$ und $i_2$ konstruktiv vorgegebene Übersetzungsverhältnisse sind und $\omega_R$ die Drehzahl des Rotors, $\omega_C$ die Drehzahl an der dritten Welle des Überlagerungsgetriebes und $\omega_G$ die Generatordrehzahl bezeichnet. Zum Antrieb der dritten Welle des Überlagerungsgetriebes wird in der Regel ein elektrischer Antrieb eingesetzt. Die Verwendung einer stromrichtergespeisten Asynchronmaschine mit Käfigläufer wird von Caselitz et al. vorgeschlagen.

Aus der vorliegenden Gleichung ist direkt einsichtig, daß bei aufgeschaltetem Generator mit konstanter Drehzahl $\omega_G$ eine variable Rotorgeschwindigkeit $\omega_R(t)$, beispielsweise aufgrund von sich ändernden Windverhältnissen und anderen Randbedingungen, durch eine Anpassung der Drehzahl an der dritten Welle ausgeglichen werden kann, wobei hier ein Drehmoment über die dritte Welle an den Generator geleitet oder von dem Rotor in die dritte Welle geleitet wird.

Aus DE 103 61 443 B4 ist eine Windenergieanlage bekannt, die einen drehzahlkonstanten, netzgekoppelten Generator aufweist. Zur Steuerung der Windenergieanlage im Teillastbereich ist ein Regler mit drei Regelungsebenen vorgesehen. In der ersten Regelungsebene wird die Eingangswelle eines Leistungsverzweigungsgetriebes von dem Windrotor angetrieben. In einem Leistungszweig ist ein hydrodynamischer Stellwandler mit Leitrad und Leitschaufeln vorgesehen. Ferner ist ein Reaktionsglied in einem Leistungszweig vorgesehen, das einen Leistungsrückfluß über den anderen Leistungszweig zum Leistungsverzweigungsgetriebe bewirkt. Als Vorteile dieser Ausgestaltung einer Windenergieanlage wird eine verbesserte Regelung bei einer Windenergieanlage mit einem Überlagerungsgetriebe angegeben.

Aus DE 103 57 292 B4 ist ein Verfahren zur Steuerung des Antriebsstrangs einer Windenergieanlage mit Drehzahlführung bekannt, wobei die Drehzahlführung über ein Leistungsverzweigungsgetriebe und einen hydrodynamischen Stellwandler erfolgt. Der hydrodynamische Stellwandler umfaßt ein Pumpenrad, ein Turbinenrad und ein einstellbares Reaktionsglied und erlaubt so eine drehzahlgeführte Regelung der Windenergieanlage bei konstanter Drehzahl für den elektrischen Generator.

Aus EP 1 283 359 A1 ist eine Windenergieanlage mit einem Überlagerungsgetriebe bekannt. Die Regelwelle zur Einstellung des Übersetzungsverhältnisses an dem Überlagerungsgetriebe wird durch eine elektrische Maschine angetrieben, um eine Drehzahl an dem Generator konstant oder innerhalb eines bestimmten Bereiches zu halten. Die elektrische Maschine kann zu diesem Zwecke sowohl generatorisch als auch motorisch betrieben werden.

Aus US 4,613,763 ist eine Windenergieanlage bekannt, bei der über eine Zentrifugalkupplung eine Rotorwelle und eine Generatorwelle voneinander entkoppelt werden.

Der Erfindung liegt die Aufgabe zugrunde, ein Verfahren zum Betrieb einer Windenergieanlage bereitzustellen, das mit einfachen Mitteln ein hohes Maß an Netzverträglichkeit und Netzverfügbarkeit ermöglicht und eine Netzstabilisierung unabhängig von der aktuell herrschenden Windgeschwindigkeit erlaubt.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren dient zum Betrieb einer Windenergieanlage, die mit einem Überlagerungsgetriebe und einem Synchrongenerator ausgestattet ist. Das Übersetzungsverhältnis zwischen Rotor und Generator wird an dem Überlagerungsgetriebe von einer Steuereinheit eingestellt. Die Steuereinheit besitzt bevorzugt einen elektrischen Antrieb, um das notwendige Drehmoment bzw. die erforderliche Drehzahl an dem Überlagerungsgetriebe bereitzustellen. Aber auch andere Steuereinheiten, wie beispielsweise hydrodynamische oder hydrostatische Steuereinheiten, können vorgesehen sein. Erfindungsgemäß ist für die Steuereinheit ein Betriebsmodus vorgesehen, in dem der Generator an das elektrische Netz angeschlossen ist und über das Überlagerungsgetriebe von dem Rotor entkoppelt ist. Für den entkoppelten Rotor kann die Drehzahl abhängig vom Wind und anderen Bedingungen frei gewählt werden. Auch kann der Rotor beispielsweise angehalten werden. Das Überlagerungsgetriebe wird also nicht nur dazu eingesetzt, Drehzahlschwankungen an dem Rotor auszugleichen, sondern auch um den Generator vollständig unabhängig von dem Rotor zu betreiben. Bei diesem Betriebsmodus entfällt das häufig mit Störungen des elektrischen Netzes verbundene Aufschalten des Synchrongenerators. Steigt die Windgeschwindigkeit nach einer Trennung des Rotors von dem Generator wieder an, so kann über das Überlagerungsgetriebe der Rotor wieder zugeschaltet werden, ohne daß der Generator erneut ans Netz geschaltet werden muß. Der erfindungsgemäße Betriebsmodus wird dafür eingesetzt, um als Phasenschieber für das Netz betrieben zu werden. Hierbei kann der Synchrongenerator angesteuert werden, um Blindleistung aus dem Netz aufzunehmen oder um Blindleistung in das Netz einzuspeisen. Hierdurch ist es möglich, elektrische Versorgungsnetze zu stabilisieren. Ein besonderer Vorteil liegt darin, daß eine Netzstabilisierung unabhängig von der aktuell herrschenden Windgeschwindigkeit erfolgen kann, da durch das Überlagerungsgetriebe der Rotor von dem Generator entkoppelt werden kann.

Bei dem erfindungsgemäßen Verfahren ist bevorzugt ein Synchrongenerator Vorgesehen, der durch eine Erregereinheit erregt wird. Der Synchrongenerator erlaubt es, durch eine Steuerung seiner Erregung den in das Netz eingespeisten Blindleistungsanteil zu regeln oder zu stellen.

In einer bevorzugten Ausgestaltung des erfindungsgemäßen Verfahrens ist vorgesehen, daß bei Unterschreiten eines bestimmten Werts für die Windgeschwindigkeit oder für die vom Generator erzeugte elektrische Leistung der Rotor über das Überlagerungsgetriebe von dem Generator mechanisch entkoppelt wird und der Synchrongenerator elektrisch mit dem Netz verbunden bleibt. Durch diesen Betriebszustand wird ein zu häufiges An- und Abkoppeln des Generators an das bzw. von dem Netz vermieden, so daß auch nur selten schaltbedingte Störimpulse von dem Synchrongenerator in dem Netz auftreten.

In einer ebenfalls bevorzugten Ausgestaltung wird ansprechend auf ein Signal der Rotor über das Überlagerungsgetriebe von der Generatorwelle entkoppelt und von dem Generator erzeugte Blindleistung in das Netz eingespeist. Das Signal kann von einem externen Energieversorgungsunternehmen vorgegeben oder von einer Parksteuerung für mehrere Windenergieanlagen erzeugt werden. Auch kann vorgesehen sein, daß eine Parksteuerung oder eine Einzelsteuerung das Signal erzeugt, wenn im Netzanschlußpunkt eine zu starke Abweichung von Referenzwerten für Strom, Spannung und/oder Phase auftritt.

In einer ebenfalls zweckmäßigen Ausgestaltung ist eine zusätzliche elektrische Maschine vorgesehen, die bevorzugt mit einem Generator kuppelbar ist. Das erfindungsgemäße Verfahren wird nachfolgend anhand von Beispielen näher erläutert. Es zeigt:

Fig. 1 eine schematische Ansicht des Antriebsstrangs einer Windenergieanlage mit einem Überlagerungsgetriebe und einem elektrischen Antrieb für die Regelwelle,

Fig. 2 eine schematische Ansicht der Windenergieanlage aus Fig. 1 mit einem zusätzlichen elektromotorischen Antrieb zum Hochführen des Generators,

Fig. 3 eine schematische Ansicht eines Antriebsstrangs mit Überlagerungsgetriebe, wobei die Regelwelle über eine hydrostatische Regeleinheit mit der Generatorwelle verbunden ist und

Fig. 4 den Antriebsstrang aus Fig. 3 mit einer hydrodynamischen Regeleinheit.

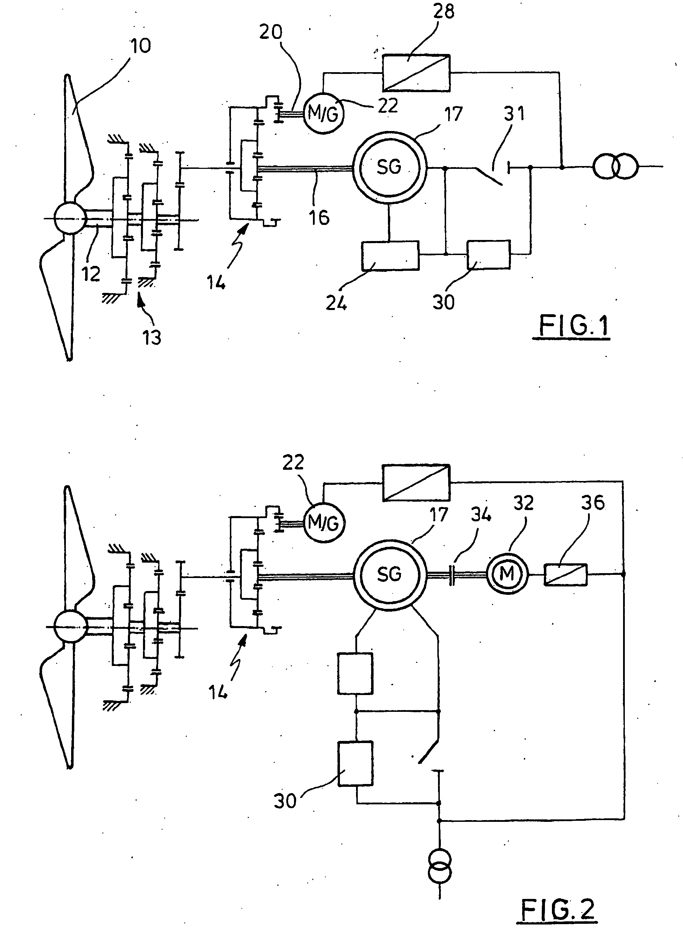

Schematisch dargestellt zeigt Fig. 1 einen Rotor 10, der die Kräfte aus dem Wind teilweise in ein Drehmoment wandelt. Über seine Rotorwelle 12 wird das Drehmoment des Rotors 10 an ein Hauptgetriebe 13 und ein Überlagerungsgetriebe 14 weitergeleitet. Das Überlagerungsgetriebe 14 besitzt eine Abtriebswelle 16, die mit einem Synchrongenerator 17 gekoppelt ist. Die dritte Welle 20 des Überlagerungsgetriebes 14 ist mit einem Motor 22 gekoppelt. Im Hinblick auf den Fluß der Drehmomente gilt, daß das an dem Generator anliegende Drehmoment der Abtriebswelle 16 sich zusammensetzt aus dem in das Überlagerungsgetriebe 14 hineinfließende Drehmoment, welches dem Drehmoment an der Abtriebswelle des Hauptgetriebes und der Rotorwelle 12 entspricht, und das über die dritte Welle 20 zusätzlich eingeführte Drehmoment des Motors 22 oder, in einem Spezialfall, das über die Welle 20 dem Überlagerungsgetriebe 14 entnommene Drehmoment. Bei letzterer Ausgestaltung wird das in das Überlagerungsgetriebe eintretende Drehmoment aufgeteilt.

Als Generator 17 ist ein Synchrongenerator vorgesehen, der mit einer Erregereinheit 24 verbunden ist. Nicht dargestellt, aber durchaus möglich, ist es einen Gleichstromzwischenkreis vorzusehen, über den die erzeugte Leistung ins Netz fließt.

Gesteuert werden sowohl der Motor 22 als auch die Erregereinheit 24 von einer zentralen Steuereinheit, die beispielsweise einen Stromrichter 28 für den Motor 22 ansteuert, um das entsprechende Moment an das Überlagerungsgetriebe 14 über die dritte Welle anzulegen. Auch die Erregereinheit 24 für den Synchrongenerator wird von der Steuereinheit angesteuert. Ein Energieversorgungsunternehmen, in der Figur nicht dargestellt, kann der Steuereinheit entsprechende Steuersignale vorgeben.

Bei dem erfindungsgemäßen Verfahren verbleibt der Generator 17 am Netz und ist mit diesem synchronisiert. Vor einem Zuschalten über das Schütz 31 überprüft eine Synchronisationseinheit 30, ob die Synchronisierungsbedingungen, beispielsweise für Spannung und Phase, generatorseitig mit den entsprechenden Werten netzseitig eingehalten sind. Der Rotor 10 ist über das Überlagerungsgetriebe 14 von der Generatorwelle 16 entkoppelt, wobei in dem dargestellten Beispiel das Hauptgetriebe 13 dazwischen geschaltet ist. Die Drehzahl des Rotors 10 kann daher reduziert werden.

Die für den Betrieb des Generators am Netz erforderliche Verlustleistung wird direkt dem Netz entnommen, wobei über die Erregereinheit 24 der Generator 17 eingestellt wird, um Blindleistung in das Netz zu liefern oder Blindleistung aus dem Netz aufzunehmen. Tritt beispielsweise ein Netzeinbruch auf, kann die Windenergieanlage somit auch bei sehr schwachen Windverhältnissen das Netz durch die Bereitstellung von Blindleistung stützen. Bei dem erfindungsgemäßen Verfahren bleibt der ans Netz gebrachte Synchrongenerator bis auf weiteres mit dem Netz verbunden und arbeitet synchron zum Netz.

Fig. 2 zeigt einen ähnlich aufgebauten Antriebsstrang für die Windenergieanlage. Hierbei ist zusätzlich ein weiterer Motor 32 vorgesehen, der über eine Kupplung 34 mit dem Generator 17 verbunden ist. Im regulären Betrieb ist der Motor 32 von dem Generator entkoppelt und wird lediglich beim Hochfahren des Generators 17 eingekoppelt, um die zum Aufschalten notwendige Drehzahl an dem Generator 17 zu erzeugen. Ist der Generator durch die Synchronisationseinheit 30 aufgeschaltet, kann die notwendige Leistung für den Generator 17 anderweitig bereitgestellt werden, beispielsweise dem Netz entnommen werden. Der Umrichter 36 steuert den Motor 32 an, um die für die Synchronisierung erforderliche Drehzahl zu erhalten.

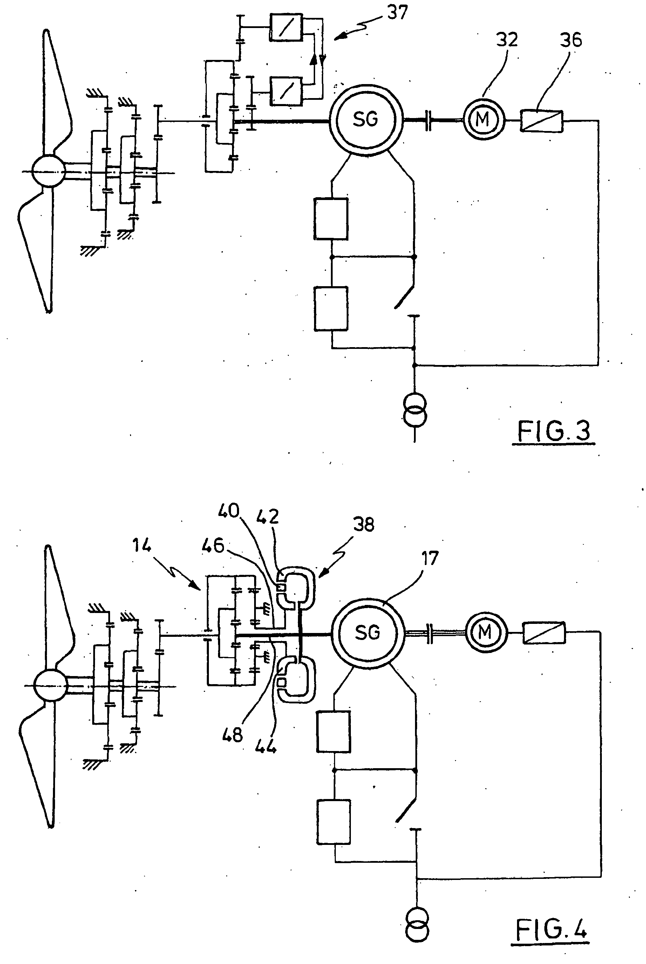

Fign. 3 und 4 zeigen den Antriebsstrang gemäß Fig. 2 mit der Abwandlung, daß der Motor 22 an dem Überlagerungsgetriebe durch ein verstellbaren Drehmomentwandler 38 oder einen Hydrostaten 37 ersetzt wurde. Der Drehmomentwandler 38 verfügt über ein Leitrad 40, das durch seine Verstellung eine Wandlung der Drehzahl und/oder des Drehmoments hervorruft. Der Wandler 38 besteht neben dem Leitrad aus einem Pumpenrad 42, das mit der Abtriebswelle 48 verbunden ist, und einem Turbinenrad 44, das mit der Regelwelle 46 verbunden ist. Zur Übertragung des Drehmoments zwischen der Abtriebswelle des Überlagerungsgetriebes und dessen Regelwelle 46 ist der Drehmomentwandler 38 mit Öl gefüllt. Zur Entkopplung zwischen Abtriebswelle 48 und Rotorwelle wird das Öl aus dem Drehmomentwandler enfernt. Bei den Hydrostaten aus Fig. 3 werden zur Entkopplung die Pumpen derart eingestellt, daß diese lastfrei mitlaufen und kein Drehmoment übertragen. In dem in Fig. 4 dargestellten Ausführungsbeispiel ist die Regelwelle, über die das Übersetzungsverhältnis des Überlagerungsgetriebes eingestellt wird, als Hohlwelle 46 ausgebildet, durch die sich die Abtriebswelle 48 des Überlagerungsgetriebes erstreckt.

**Patentansprüche**

1. Verfahren zum Betrieb einer Windenergieanlage mit einem Synchrongenerator (17) und einem Überlagerungsgetriebe (14), das zwischen Rotor (10) und Generator (17) geschaltet ist, und dessen Übersetzungsverhältnis von einer Steuereinheit eingestellt wird, **dadurch gekennzeichnet, daß** ein Betriebsmodus vorgesehen ist, in dem der Generator (17) an das elektrische Netz angeschlossen ist und die Generatorwelle (16) über das Überlagerungsgetriebe (14) von der Rotorwelle (10, 12) entkoppelt wird und der Synchrongencrator (17) als Phasenschieber für das Netz betrieben wird.

2. Verfahren nach Anspruch 1, **dadurch gekennzeichnet, daß** der Synchrongenerator (17) über eine Erregereinheit (24) fremderregt wird.

3. Verfahren nach Anspruch 2, **dadurch gekennzeichnet, daß** der Synchrongenerator von der Erregereinheit als Phasenschieber angesteuert wird, um Blindleistung aus dem Netz aufzunehmen.

4. Verfahren nach Anspruch 2, **dadurch gekennzeichnet, daß** der Synchrongenerator von der Erregereinheit als Phasenschieber angesteuert wird, um Blindleistung in das Netz einzuspeisen.

5. Verfahren nach einem der Ansprüche 1 bis 4, **dadurch gekennzeichnet, daß** bei Unterschreiten eines vorbestimmten Werts für die Windgeschwindigkeit oder für die elektrische Generatorleistung der Rotor über das Überlagerungsgetriebe von dem Generator entkoppelt wird und der Synchrongenerator an das Netz gekoppelt bleibt.

6. Verfahren nach einem der Ansprüche 1 bis 5, **dadurch gekennzeichnet, daß** ansprechend auf ein Signal der Rotor über das Überlagerungsgetriebe (14) von der Generatorwelle (16) entkoppelt und Blindleistung in das Netz eingespeist wird.

7. Verfahren nach Anspruch 6, **dadurch gekennzeichnet, daß** das Signal ein extern von einem Energieversorgungsunternehmen oder von einer Regelung für einen Windpark vorgegebenes Signal ist.

8. Verfahren nach einem der Ansprüche 1 bis 7, **dadurch gekennzeichnet, daß** die Steuereinheit hydrostatisch oder hydrodynamisch das Übersetzungsverhältnis zwischen Rotor- und Generatorwelle einstellt und/oder einregelt.

9. Verfahren nach einem der Ansprüche 1 bis 7, **dadurch gekennzeichnet, daß** die Steuereinheit einen elektrischen Antrieb aufweist, um das Übersetzungsverhältnis zwischen Rotor- und Motorwelle einzustellen und/oder einzuregeln.

10. Verfahren nach einem der Ansprüche 1 bis 9, **dadurch gekennzeichnet, daß** zusätzlich zu der Steuereinheit eine mit dem Generator gekoppelte elektrische Maschine (32) vorgesehen ist.

11. Verfahren nach Anspruch 10, **dadurch gekenn-**

**zeichnet, daß** die elektrische Maschine kuppelbar mit dem Generator verbunden ist.

## Claims

1. A method for operating a wind turbine with a synchronous generator (17) and a superimposition gearbox (14), which is connected between a rotor (10) and the generator (17), and the gear ratio of which is adjusted by a control unit, **characterized in that** a mode of operation is provided in which the generator (17) is connected to the electric grind, and the generator shaft (16) is uncoupled from the rotor shaft (10, 12) via the superimposition gearbox (14) and the synchronous generator (17) is operated as a phase shifter for the grid.

2. A method according to claim 1, **characterized in that** the synchronous generator (17) is separately excited by an excitation unit (24).

3. A method according to claim 2, **characterized in that** the synchronous generator (17) is driven as a phase shifter by the excitation unit (24) in order to take up reactive power from the grid.

4. A method according to claim 2, **characterized in that** the synchronous generator (17) is driven as a phase shifter by the excitation unit in order to supply reactive power into the grid.

5. A method according to claim 1 to 4, **characterized in that** when falling below a predetermined value for the wind velocity or for the electric generator power, the rotor is uncoupled from the generator via the superimposition gearbox, and the synchronous generator remains coupled to the grid.

6. A method according to claim 1 to 5, **characterized in that** in reaction to a signal, the rotor is uncoupled from the generator shaft (16) via the superimposition gearbox (14) and reactive power is supplied into the grid.

7. A method according to claim 6, **characterized in that** the signal is a signal externally preset by an electric utility or by a control device for a wind park.

8. A method according to claim 1 to 7, **characterized in that** the control unit adjusts and/or regulates the gear ratio between rotor shaft and generator shaft hydrostatically or hydrodynamically.

9. A method according to claim 1 to 7, **characterized in that** the control unit has an electric drive in order to adjust and/or regulate the gear ratio between rotor shaft and motor shaft.

10. A method according to claim 1 to 9, **characterized in that** an electric machine (32), coupled to the generator, is provided in addition to the control unit.

11. A method according to claim 10, **characterized in that** the electric machine is detachable connected to the generator.

## Revendications

1. Procédé de fonctionnement d'une éolienne avec un générateur synchrone (17) et un engrenage à superposition (14) qui est connecté entre rotor (10) et générateur (17) et dont le rapport de transmission est ajusté par une unité de commande, **caractérisé en ce que** un mode de fonctionnement est prévu dans lequel le générateur (17) est connecté au réseau électrique, et l'arbre (16) du générateur est découplé de l'arbre (10, 12) du rotor à l'intermédiaire de l'engrenage de superposition (14) et le générateur synchrone (17) est opéré comme un déphaseur pour le réseau.

2. Procédé selon la revendication 1, **caractérisé en ce que** le générateur synchrone (17) est excité de manière séparée par une unité excitatrice (24).

3. Procédé selon la revendication 2, **caractérisé en ce que** le générateur synchrone (17) est commandé comme déphaseur par l'unité excitatrice (24) afin de recevoir de l'énergie électrique réactive du réseau.

4. Procédé selon la revendication 2, **caractérisé en ce que** le générateur synchrone (17) est commandé comme déphaseur par l'unité excitatrice afin d'alimenter de l'énergie électrique réactive au réseau.

5. Procédé selon l'une quelconque des revendications 1 à 4, **caractérisé en ce que** le rotor est découple du générateur à l'intermédiaire de l'engrenage à superposition et le générateur synchrone reste couplé au réseau quand la vitesse du vent ou la puissance électrique du générateur est inférieure à une valeur prédéterminée.

6. Procédé selon l'une quelconque des revendications 1 à 5, **caractérisé en ce que** le rotor est découple de l'arbre (16) du générateur à l'intermédiaire de l'engrenage à superposition (14) et de l'énergie électrique réactive est alimentée au réseau en réponse à un signal.

7. Procédé selon la revendication 6, **caractérisé en ce que** le signal est un signal prescrit de façon externe par une société d'approvisionnement en énergie ou par un système de régulation pour un parc éolien.

8. Procédé selon l'une quelconque des revendications 1 à 7, **caractérisé en ce que** l'unité de commande ajuste et/ou règle le rapport de transmission entre l'arbre du rotor et l'arbre du générateur de manière hydrostatique ou hydrodynamique.

9. Procédé selon l'une quelconque des revendications 1 à 7, **caractérisé en ce que** l'unité de commande a un entrainement électrique pour ajuster et/ou régler le rapport de transmission entre l'arbre du rotor et l'arbre du générateur.

10. Procédé selon l'une quelconque des revendications 1 à 9, **caractérisé en ce que** une machine électrique (32) accouplée au générateur est prévue en addition à l'unité de commande.

11. Procédé selon la revendication 10, **caractérisé en ce que** la machine électrique est reliée au générateur en pouvant être accouplée à ceci.

FIG.1

FIG.2

FIG.3

FIG.4

**EP 1 895 158 B1**

**IN DER BESCHREIBUNG AUFGEFÜHRTE DOKUMENTE**

**In der Beschreibung aufgeführte Patentdokumente**

- DE 10361443 B4
- DE 10357292 B4
- EP 1283359 A1
- US 4613763 A

**In der Beschreibung aufgeführte Nicht-Patentliteratur**

- **P. CASELITZ et al.** Drehzahlvariable Windkraftanlagen mit elektrisch geregeltem Überlagerungsgetriebe. *Konferenzband ''DEWEK '92,* 171-175